# EUROPÄISCHE PATENTSCHRIFT

(11) **EP 2 083 248 B1**
(45) Veröffentlichungstag und Bekanntmachung des Hinweises auf die Patenterteilung: **17.09.2014**
(21) Anmeldenummer: 08018210.8
(22) Anmeldetag: 17.10.2008
(51) Int. Cl.: G01D 5/347, G01D 11/24

(54) **Längenmesseinrichtung**
Length measuring device
Dispositif de mesure de longueur

(30) Priorität: 22.01.2008 DE 102008005384
(43) Veröffentlichungstag der Anmeldung: 29.07.2009
(73) Patentinhaber: Dr. Johannes Heidenhain GmbH, 83301 Traunreut (DE)
(72) Erfinder: Haunreiter, Johannes, 84489 Burghausen (DE)

(56) Entgegenhaltungen:
- DD-A1- 120 707
- DE-A1- 10 250 094
- DE-A1- 19 543 647

## Beschreibung

Die Erfindung betrifft eine Längenmesseinrichtung nach dem Oberbegriff des Anspruchs 1.

Die Anforderungen an Längenmesseinrichtungen werden immer höher, es wird laufend eine höhere Genauigkeit und Reproduzierbarkeit der Positionsmessung gefordert. Dabei soll ein kompakter mechanischer Aufbau sowie eine einfache und langfristig störungssichere Messwertgenerierung vorhanden sein.

Diese Anforderungen bedingen eine gekapselte Längenmesseinrichtung mit geschützt untergebrachtem Maßstab und Abtasteinheit als Messelemente. Eine hohe Genauigkeit und Reproduzierbarkeit bedingt einen über die gesamte Messlänge konstanten Abtastabstand. Dies wird durch Führung eines der Messelemente in Messrichtung gewährleistet. Um Anbautoleranzen bzw. Führungsungenauigkeiten der zu messenden Objekte zu kompensieren, ist das geführte Messelement über eine nur in Messrichtung steife Koppelstange an dem zu messenden Objekt angekoppelt. Diese Koppelstange ermöglicht in allen anderen Richtungen eine Ausgleichsbewegung ohne unzulässige Rückwirkung auf die präzise Führung und Bewegung des Messelementes in Messrichtung.

Eine konstruktiv einfache Abdichtung der Längenmesseinrichtung wird erreicht, indem eine in Messrichtung längserstreckte Koppelstange in Form einer Schubstange verwendet wird, die durch eine Öffnung am Gehäuse herausgeführt ist und die Abdichtung dieser Öffnung mittels einer Dichtung erfolgt. Um nun die Ausgleichsbewegung der Koppelstange quer zur Messrichtung zu ermöglichen, wird gemäß der EP 0 257 210 B1 vorgeschlagen, die Dichtung über quer zur Messrichtung auslenkbare Elemente wie Drähte, Blattfedern oder Stäbe am Gehäuse zu befestigen. Dabei wird die Dichtung von der Koppelstange geführt und Kippbewegungen der Koppelstange werden auf die Dichtung übertragen.

Nachteilig dabei ist, dass wechselnde Querkräfte auf die Dichtung ausgeübt werden, was sich einerseits nachteilig auf die Dichtigkeit auswirkt und andererseits auch auf die Messgenauigkeit.

Eine ähnliche Längenmesseinrichtung ist in der DD 120 707 A beschrieben. Um die quer zur Messrichtung bewegliche Dichtung zu vermeiden, ist ein mit der Koppelstange bewegbares Rohr vorgesehen, das durch eine am Gehäuse fest angeordnete Gleitdichtung geführt ist. Das Rohr ist mit einem Anbauflansch in radialer Richtung zur Koppelstange elastisch und gelenkig verbunden und am dem Abtastelement zugewandten Ende in jeder Richtung elastisch am Abtastelement abgestützt oder frei beweglich.

Nachteilig dabei ist auch hier, dass wechselnde Querkräfte auf die Dichtung ausgeübt werden, was sich einerseits nachteilig auf die Dichtigkeit auswirkt und andererseits auch auf die Messgenauigkeit. Zusätzlich ist eine weitere Dichtung in Form einer Gummimanschette erforderlich, um den Innenraum des Gehäuses abzudichten, die Ausgleichsbewegungen ausgleichen muss und dadurch auch eine kurze Lebensdauer aufweist.

In der DE 102 50 094 A1 ist eine Koppeistange beschrieben, welche an einem Messschlitten einer Längenmesseinrichtung befestigt ist. Diese Koppelstange umfasst einen Dämpfungskörper.

Der Erfindung liegt daher die Aufgabe zugrunde, eine kompakte gekapselte Längenmesseinrichtung mit hoher Messgenauigkeit zu schaffen, bei der die Messgenauigkeit und Zuverlässigkeit für möglichst lange Zeit gewährleistet ist.

Diese Aufgabe wird erfindungsgemäß durch eine Längenmesseinrichtung mit den Merkmalen des Anspruchs 1 gelöst.

Mit der Erfindung wird ein kompakter Aufbau einer Längenmesseinrichtung ermöglicht; wobei auch eine hohe Messgenauigkeit und eine reproduzierbare Positionsmessung erreichbar ist. Darüber hinaus ist gewährleistet, dass die Querkräfte auf die Dichtung minimiert sind und dadurch eine dichte gekapselte Längenmesseinrichtung für lange Zeit geschaffen ist.

In den abhängigen Ansprüchen sind vorteilhafte Ausgestaltungen der Erfindung angegeben.

Die Erfindung wird mit Hilfe von Ausführungsbeispielen näher erläutert.

Dabei zeigt
- Figur 1: einen Längsschnitt einer Längenmesseinrichtung;
- Figur 2: eine erste alternative Ausgestaltung einer Koppelstange;
- Figur 3: eine zweite alternative Ausgestaltung einer Koppelstange und
- Figur 4: eine dritte alternative Ausgestaltung einer Koppelstange.

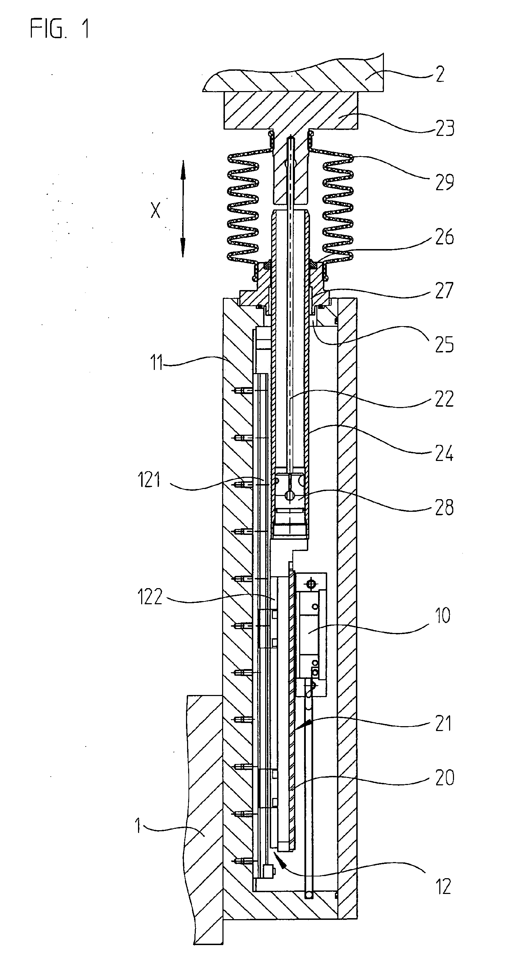

Eine erfindungsgemäß ausgebildete Längenmesseinrichtung zum Messen der Relativlage zweier Objekte 1 und 2, indem durch Relativbewegung eines ersten Messelementes 10 gegenüber eines zweiten Messelementes 20 positionsabhängige Abtastsignale erzeugbar sind, ist in Figur 1 im Längsschnitt dargestellt. Die Erfindung ist am Beispiel einer optischen Längenmesseinrichtung dargestellt, mit der die Relativlage der zwei in Messrichtung X gegeneinander verschiebbaren Objekte 1 und 2 gemessen werden soll. Die Längenmesseinrichtung weist hierzu einen Maßstab 20 als eines der Messelemente und eine den Maßstab 20 abtastende Abtasteinheit 10 als das andere der Messelemente auf. Bei der Positionsmessung wird der Maßstab 20 von der relativ zum Maßstab 20 in Messrichtung X bewegbaren Abtasteinheit 10 abgetastet. Der Maßstab 20 weist eine Messteilung 21 auf, die von der Abtasteinheit 10 in bekannter Weise abgetastet wird, indem ein Lichtbündel von der Messteilung 21 am Maßstab 20 positionsabhängig moduliert wird und positionsabhängige Abtastsignale erzeugt werden.

Im dargestellten Ausführungsbeispiel ist die Abtasteinheit 10 innerhalb eines Gehäuses 11 zumindest in Messrichtung X stationär-angeordnet, welches wiederum zur Positionsmessung mit dem zu messenden Objekt 1, bleispielsweise einem Maschinenbett einer Werkzeugmaschine verbindbar ist. Der Maßstab 20 ist im Gehäuse 11 in Messrichtung X geführt. Hierzu ist am Gehäuse 11 eine Längsführung 12 vorgesehen, die im Beispiel als präzise Kugelumlaufführung mit einer am Gehäuse 11 befestigten, insbesondere angeschraubten, Führungsschiene 121 ausgebildet ist. Der Maßstab 20 ist an einem Führungsschlitten 122 montiert, der an der Führungsschiene 121 gelagert ist und der mit der Führungsschiene 121 die präzise parallel zur Messrichtung X ausgerichtete Längsführung 12 bildet.

Zur Sicherstellung eines konstanten Abtastabstandes zwischen dem Maßstab 20 und der Abtasteinheit 10 über die gesamte Messlänge, kann die Abtasteinheit 10 auch in an sich bekannter Weise am Maßstab 20 längsgeführt sein und mittels einer Kupplung am Gehäuse 11 angekoppelt sein, die Bewegungen der Abtasteinheit 10 gegenüber dem Gehäuse 11 quer zur Messrichtung X zulässt. Hierzu können an der Abtasteinheit 10 beispielsweise Gleitschuhe oder Rollen angebracht sein, mit denen sich die Abtasteinheit 10 am Maßstab 20 abstützt.

Die von der Abtasteinheit 10 erzeugten elektrischen Abtastsignale , digital oder analog, werden nach außen geführt und über ein Kabel oder eine am Gehäuse 11 befestigten Steckverbindung zur Verfügung gestellt.

Zur Übertragung der Bewegung des zu messenden Objektes 2 mit dem Maßstab 20 ist eine in Messrichtung X längs erstreckte Koppelstange 22 in Form einer Schub- und Zugstange vorgesehen, die einerseits mit dem innerhalb des Gehäuses 11 an der Längsführung 12 in Messrichtung X verschiebbaren Maßstab 20 verbunden ist und die aus dem Gehäuse 11 herausgeführt ist, so dass sie andererseits außerhalb des Gehäuses 11 mit dem Objekt 2 verbindbar ist. Die Koppelstange 22 ist derart ausgebildet, dass sie den Maßstab 20 mit dem zweiten Objekt 2 in Messrichtung X starr verbindet, aber quer zur Messrichtung X verlaufende Ausgleichsbewegungen zulässt. In bevorzugter Weise ist die Koppelstange 22 eine längssteife und in allen Richtungen quer zur Messrichtung X elastisch biegbar ausgebildete Stange in Form eines Drahtes, insbesondere Federdrahtes. Die Dimensionierung dieses Drahtes ist so gewählt, dass die Koppelstange 22 Bewegungen des Objektes 2 in Messrichtung X ohne auszuknicken exakt überträgt, aber Ausgleichsbewegungen, wie Schwenkbewegungen oder seitliche Querbewegungen senkrecht zur Messrichtung X des Objektes 2 gegenüber dem Maßstab 20 ausgleicht, ohne unzulässige Kräfte auf die Längsführung 12 zu übertragen. Bei einer Länge der Koppelstange 22 und somit des Biegedrahtes von etwa 160mm ergibt sich dabei ein Durchmesser der Koppelstange 22 aus Stahl von etwa 4mm.

Am objektseitigen Ende der Koppelstange 22 ist ein Montageflansch 23 befestigt, welcher eine kundenfreundliche Montage an das zu messende Objekt 2, beispielsweise durch Anschrauben, ermöglicht.

Um die Koppelstange 22 ist ein steifes Rohr 24 vorgesehen, das parallel zur Längsführung 12 verläuft und sich vom Maßstab 20 ausgehend innerhalb des Gehäuses 11 durch eine Öffnung 25 des Gehäuses 11 bis nach außen erstreckt. Die Öffnung 25 ist gegenüber dem Außenumfang des Rohres 24 abgedichtet. Hierzu ist am Gehäuse 11 eine Ringdichtung 26 in Form einer Gleitringdichtung angebracht, die mit dem Außenumfang des Rohres 24 dichtend zusammenwirkt. Die Ringdichtung 26 ist nur als Einzeldichtung dargestellt, sie kann in nicht gezeigter Weise auch aus mehreren hintereinander angeordneten Dichtelementen bestehen.

Die Verbindung 28 des Rohres 24 mit dem Maßstab 20 erfolgt in vorteilhafter Weise über den Führungsschlitten 122. Die Verbindung 28 ist derart ausgeführt, dass das Rohr 24 mittels der Längsführung 12 parallel in Messrichtung X gerade geführt wird. Hierzu ist das Rohr 24 in allen Freiheitsgraden starr an der Baueinheit Führungsschlitten 122 und Maßstab 20 befestigt. Darüber hinaus ist das Rohr 24 an dieser Verbindung 28, also im Bereich des maßstabseitigen Endes vor der ausgleichenden Koppelstange 22 hermetisch gegenüber dem Innenraum des Gehäuses 11 derart verschlossen, dass keine Verunreinigungen, insbesondere in Form von Staub oder Flüssigkeiten von außen über den Innenraum des Rohres 24 in den Innenraum des Gehäuses 11 gelangen können. Dieser Verschluss kann einstückig am Rohr 24 selbst ausgeführt sein oder eingeklebt, eingeschweißt bzw. eingeklemmt sein. Erst die Erfindung ermöglicht die Ausbildung eines starren, also nicht Querbewegungen zulassenden Verschlusses, der somit langzeitstabil dicht ausführbar ist.

Die Länge des Rohres 24 ist derart gewählt, dass es über die gesamte vom Maßstab 20 zur Verfügung gestellte Messlänge, also über den erforderlichen Verschiebeweg in Messrichtung X, mit seinem Außendurchmesser mit der Dichtung 26 kooperiert und das Gehäuse 11 hermetisch abdichtet. Bei besonders großen Messlängen kann es vorteilhaft sein, wenn sich das Rohr 24 über seine Länge zusätzlich an zumindest einer weiteren Stelle am Gehäuse 11 abstützt. Eine Möglichkeit einer derartigen zusätzlichen Abstützung, die eine schwingungsfeste Parallelführung des Rohres 24 in Messrichtung X gewährleistet ist, dass im Bereich der Öffnung 25 eine Führungsbuchse 27, beispielsweise als Gleitführung ausgebildet, angebracht ist, in der das Rohr 24 mit seinem Außendurchmesser gelagert ist.

Als Rohr 24 wird gemäß der Erfindung auch eine hohle Stange mit einer Sacklochbohrung bezeichnet, die also bis kurz vor dem maßstabseitigen Ende durchbohrt ist, und somit das Rohr 24 von dem durchbohrten Bereich der Stange gebildet wird.

Die Koppelstange 22 verläuft innerhalb des Rohres 24 und der Innendurchmesser des Rohres 24 ist derart gewählt, dass die quer zur Messrichtung X verlaufenden Ausgleichsbewegungen der Koppelstange 22 innerhalb des Rohres 24 ermöglicht werden. Um bei dem Einsatz in rauer Umgebung eine Verschmutzung des Innenraums der Koppelstange 22 zu vermeiden, welche die freie Beweglichkeit der Koppelstange 22 innerhalb des Rohres 24 behindern würde, kann das Rohr 24 am objektseitigen Ende abgedichtet sein, wozu sich ein Balg 29 eignet. Im Messbetrieb treten in dem durch den Balg 29 abgedichteten Raum Volumenänderungen statt. Es können an sich bekannte Maßnahmen getroffen werden, um Volumenänderung zu ermöglichen und ein wechselndes Aufblähen und Zusammenziehen des Balges 29 zu vermeiden.

Im Messbetrieb können auch im Innenraum des Gehäuses 11 Volumenänderungen auftreten, die zu Druckänderungen führen können, sollten dies Druckänderungen stören, kann auch ein Druckausgleich geschaffen werden. Eine Möglichkeit wäre den Innenraum des Gehäuses 11 an eine Druckluftquelle anzuschließen, mit der der Innenraum mit einem konstanten Überdruck beaufschlagt wird. Durch diese Maßnahme wird auch die langzeitstabile Abdichtung der Öffnung 25 mittels der Dichtung 26 noch weiter verbessert.

Mit der Erfindung ist eine platzsparende Anordnung gewährleistet, da die Länge der Koppelstange 22 von der Verbindungsstelle 28 ausgehend bis zum Montageflansch 23 für Ausgleichsbewegungen zur Verfügung steht. Trotz dieser damit geschaffenen Möglichkeit von Ausgleichsbewegungen innerhalb des Bauraums des Gehäuses 11, also vor der Dichtung 26, ist eine unzulässige Querbelastung der Dichtung 26 ausgeschlossen, da das Rohr 24 stabil parallel geführt ist. Durch die Gesamtkonstruktion ist gewährleistet, dass über die gesamte Messlänge auch bei dem Auftreten von Ausgleichsbewegungen keine wechselnden Belastungen auf die Dichtung 26 ausgeübt werden und somit über das Dichtsystem, bestehend aus dem Rohr 24 und der Dichtung 26, keine Kräfte eingeleitet werden, welche die Messgenauigkeit nachteilig beeinflussen. Darüber hinaus ist dadurch auch eine lange Lebensdauer der Dichteinheit 24/26 gewährleistet, was die Zuverlässigkeit der Längenmesseinrichtung auch in rauer Umgebung über lange Zeit sicherstellt.

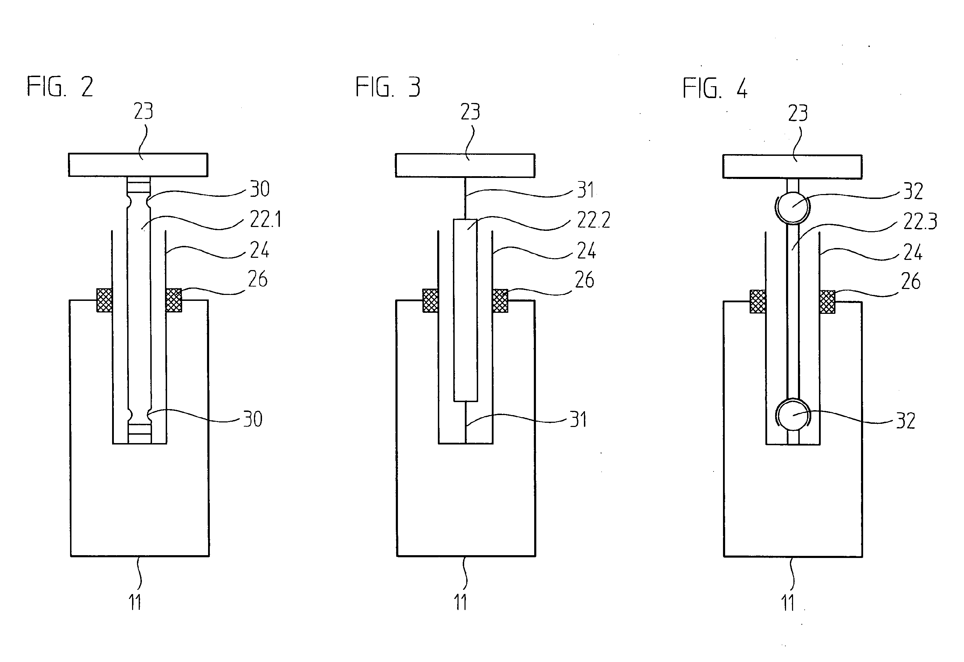

Die Koppelstange 22 muss einerseits in Messrichtung X starr ausgebildet sein, so dass sie die Messbewegung fehlerfrei überträgt und andererseits muss sie Ausgleichsbewegungen quer zur Messrichtung X zulassen. Diese Anforderungen erfüllt die in Figur 1 erläuterte Ausgestaltung optimal. Es steht die gesamte Länge der Koppelstange 22 zur Verfügung, um die erforderlichen Bewegungen durch Biegung auszugleichen. Alternative Ausgestaltungen der Koppelstange sind in den Figuren 2 bis 4 dargestellt.

Die Koppelstangen 22.1, 22.2, 22.3 gemäß den Figuren 2 bis 4 bestehen jeweils aus einer längssteifen sowie quersteifen Stange mit mehreren in Längsrichtung X voneinander beabstandeten Gelenken 30, 31, 32. Die Gelenke 30 und 31 sind als Biegegelenke ausgebildet, wobei die Biegegelenke 30 gemäß Figur 2 als sogenannte Schwachstellengelenke ausgebildet sind und die Biegegelenke 31 gemäß Figur 3 kurze Federn in Form von Drahtfedern oder Blattfedern sind. Sind die Anforderungen an die Übertragungsgenauigkeit geringer, können auch Drehgelenke 32 eingesetzt werden, wie sie beispielhaft in Figur 4 schematisch dargestellt sind.

Die Erfindung wurde anhand einer besonders genau messenden lichtelektrischen Längenmesseinrichtung erläutert. Alternativ können die Messelemente, also der Maßstab 20 und die Abtasteinheit 10, auch derart ausgebildet sein, dass positionsabhängige Abtastsignale nach dem magnetischen, kapazitiven oder induktiven Abtastprinzip generiert werden. Die Messteilung 21 ist dabei als inkrementale Teilung oder als absoluter Code ausgestaltet.

## Patentansprüche

1. Längenmesseinrichtung zum Messen der Relativlage zweier Objekte (1, 2), indem durch Relativbewegung eines ersten Messelementes (10) gegenüber eines zweiten Messelementes (20) positionsabhängige Abtastsignale erzeugbar sind, mit
- einem Gehäuse (11), dem das erste Messelement (10) zugeordnet ist und das mit dem ersten der beiden Objekte (10) verbindbar ist;
- einer in Messrichtung X längs erstreckten Koppelstange (22, 22.1, 22.2, 22.3), die einerseits mit dem innerhalb des Gehäuses (11) an einer Längsführung (12) in Messrichtung X verschiebbaren zweiten Messelement (20) verbunden ist und die aus dem Gehäuse (11) herausgeführt ist, so dass sie andererseits außerhalb des Gehäuses (11) mit dem zweiten der beiden Objekte (2) verbindbar ist, wobei die Koppelstange (22, 22.1, 22.2, 22.3) das zweite Messelement (20) mit dem zweiten Objekt (2) in Messrichtung X starr verbindet, aber quer zur Messrichtung X verlaufende Ausgleichsbewegungen zulässt;
- einem sich in Messrichtung X längs erstreckenden Rohr (24), welches mit dem zweiten Messelement (20) verbunden ist und abgedichtet durch eine Öffnung (25) des Gehäuses (11) herausgeführt ist, wobei die Koppelstange (22, 22.1, 22.2, 22.3) innerhalb des Rohres verläuft,
**dadurch gekennzeichnet, dass**
- das zweite Messelement ein Maßstab (20) mit einer Messteilung (21) ist, und das erste Messelement eine den Maßstab (20) abtastende Abtasteinheit (10) ist;
- das Rohr (24) mit dem Maßstab (20) in allen Freiheitsgraden starr verbunden ist, so dass es mittels der Längsführung (12) in Messrichtung X parallel geführt ist, wobei
das Rohr (24) quer zur Messrichtung X verlaufende Ausgleichsbewegungen der Koppelstange (22, 22.1, 22.2, 22.3) innerhalb des Rohres (24) ermöglicht.

2. Längenmesseinrichtung nach Anspruch 1, **dadurch gekennzeichnet, dass** die Koppelstange (22) ein längssteifer Draht ist, der quer zur Messrichtung X biegbar ausgebildet ist.

3. Längenmesseinrichtung nach Anspruch 1, **dadurch gekennzeichnet, dass** die Koppelstange (22.1, 22.2, 22.3) eine längssteife Stange mit mehreren in Längsrichtung voneinander beabstandeten Gelenken (30, 31, 32) ist.

4. Längenmesseinrichtung nach Anspruch 3, **dadurch gekennzeichnet, dass** die Gelenke Biegegelenke (30, 31) sind.

5. Längenmesseinrichtung nach einem der vorhergehenden Ansprüche, **dadurch gekennzeichnet, dass** das Rohr (24) im Bereich des zweiten Messelementes (20) vor der Koppelstange (22, 22.1, 22.2, 22.3) gegenüber dem Innenraum des Gehäuses (11) verschlossen ist.

6. Längenmesseinrichtung nach einem der vorhergehenden Ansprüche, **dadurch gekennzeichnet, dass** die Öffnung (25) des Gehäuses (11) mittels einer Dichtung (26) in Form einer Gleitringdichtung abgedichtet ist, die mit dem Außenumfang des Rohres (24) kooperiert.

7. Längenmesseinrichtung nach einem der vorhergehenden Ansprüche, **dadurch gekennzeichnet, dass** das Rohr (24) an der Öffnung (25) des Gehäuses (11) zusätzlich mittels einer Führungsbuchse (27) in Messrichtung X geführt ist.

## Claims

1. Length measuring device for measuring the relative position of two objects (1, 2), in that position-dependent scanning signals can be generated by relative movement of a first measuring element (10) with respect to a second measuring element (20), comprising
- a housing (11), to which the first measuring element (10) is assigned and which can be connected to the first of the two objects (1);
- a coupling rod (22, 22.1, 22.2, 22.3), which is extended longitudinally in the measuring direction X and on one side is connected to the second measuring element (20), displaceable in the measuring direction X on a longitudinal guide (12) within the housing (11), and which is guided out of the housing (11), so that it can be connected on the other side, outside the housing (11), to the second of the two objects (2), the coupling rod (22, 22.1, 22.2, 22.3) connecting the second measuring element (20) to the second object (2) rigidly in the measuring direction X but permitting compensatory movements running transversely with respect to the measuring direction X;
- a tube (24) which extends longitudinally in the measuring direction X, is connected to the second measuring element (20) and is led out in a sealed manner through an opening (25) in the housing (71), the coupling rod (22, 22.1, 22.2, 22.3) running within the tube,
**characterized in that**
- the second measuring element is a rule (20) with a measuring graduation (21), and the first measuring element is a scanning unit (10) scanning the rule (20);
- the tube (24) is rigidly connected to the rule (20) in all degrees of freedom, so that it is guided parallel to the measuring direction X by means of the longitudinal guide (12), the tube (24) permitting compensatory movements of the coupling rod (22, 22.1, 22.2, 22.3) running transversely with respect to the measuring direction X within the tube (24).

2. Length measuring device according to Claim 1, **characterized in that** the coupling rod (22) is a longitudinally rigid wire, which is designed to be flexible transversely with respect to the measuring direction X.

3. Length measuring device according to Claim 1, **characterized in that** the coupling rod (22.1, 22.2, 22.3) is a longitudinally rigid rod having a plurality of joints (30, 31, 32) spaced apart from one another in the longitudinal direction.

4. Length measuring device according to Claim 3, **characterized in that** the joints are bending joints (30, 31).

5. Length measuring device according to one of the preceding claims, **characterized in that**, in the region of the second measuring element (20) in front of the coupling rod (22, 22.1, 22.2, 22.3), the tube (24) is closed with respect to the interior of the housing (11).

6. Length measuring device according to one of the preceding claims, **characterized in that** the opening (25) in the housing (11) is sealed off by means of a seal (26) in the form of a sliding ring seal, which cooperates with the outer circumference of the tube (24).

7. Length measuring device according to one of the preceding claims, **characterized in that** at the opening (25) in the housing (11), the tube (24) is additionally guided in the measuring direction X by means of a guide bush (27).

## Revendications

1. Dispositif de mesure de longueur pour mesurer la position relative de deux objets (1, 2), en ce que des signaux de détection dépendant de la position peuvent être générés par un mouvement relatif d'un premier élément de mesure (10) par rapport à un deuxième élément de mesure (20), comprenant
- un boîtier (11) auquel est associé le premier élément de mesure (10) et qui peut être connecté au premier des deux objets (1) ;
- une barre d'accouplement (22, 22.1, 22.2, 22.3) s'étendant longitudinalement dans la direction de mesure X, laquelle est connectée d'une part au deuxième élément de mesure (20) pouvant être déplacé à l'intérieur du boîtier (11) sur un guide longitudinal (12) dans la direction de mesure X et laquelle est guidée hors du boîtier (11) de sorte qu'elle puisse être connectée d'autre part à l'extérieur du boîtier (11) au deuxième des deux objets (2), la barre d'accouplement (22, 22.1, 22.2, 22.3) reliant rigidement le deuxième élément de mesure (20) au deuxième objet (2) dans la direction de mesure X mais permettant des mouvements de compensation s'étendant transversalement à la direction de mesure X ;
- un tube (24) s'étendant longitudinalement dans la direction de mesure X, lequel est connecté au deuxième élément de mesure (20) et est ressorti de manière étanchéifiée à travers une ouverture (25) du boîtier (11), la barre d'accouplement (22, 22.1, 22.2, 22.3) s'étendant à l'intérieur du tube,
**caractérisé en ce que**
- le deuxième élément de mesure est une échelle de mesure (20) avec une division de mesure (21), et le premier élément de mesure est une unité de détection (10) détectant l'échelle de mesure (20) ;
- le tube (24) est connecté rigidement à l'échelle de mesure (20) suivant tous les degrés de liberté, de sorte qu'il soit guidé parallèlement au moyen du guide longitudinal (12) dans la direction de mesure X, le tube (24) permettant des mouvements de compensation s'étendant transversalement à la direction de mesure X de la barre d'accouplement (22, 22.1, 22.2, 22.3) à l'intérieur du tube (24).

2. Dispositif de mesure de longueur selon la revendication 1, **caractérisé en ce que** la barre d'accouplement (22) est un fil métallique de rigidité longitudinale qui est réalisé de manière flexible transversalement à la direction de mesure X.

3. Dispositif de mesure de longueur selon la revendication 1, **caractérisé en ce que** la barre d'accouplement (22.1, 22.2, 22.3) est une barre de rigidité longitudinale avec plusieurs articulations (30, 31, 32) espacées les unes des autres dans la direction longitudinale.

4. Dispositif de mesure de longueur selon la revendication 3, **caractérisé en ce que** les articulations sont des articulations flexibles (30, 31).

5. Dispositif de mesure de longueur selon l'une quelconque des revendications précédentes, **caractérisé en ce que** le tube (24) est fermé dans la région du deuxième élément de mesure (20) avant la barre d'accouplement (22, 22.1, 22.2, 22.3) par rapport à l'espace interne du boîtier (11).

6. Dispositif de mesure de longueur selon l'une quelconque des revendications précédentes, **caractérisé en ce que** l'ouverture (25) du boîtier (11) est fermée hermétiquement au moyen d'un joint d'étanchéité (26) en forme de garniture mécanique d'étanchéité, qui coopère avec la périphérie extérieure du tube (24).

7. Dispositif de mesure de longueur selon l'une quelconque des revendications précédentes, **caractérisé en ce que** le tube (24) est guidé en outre dans la direction de mesure X au niveau de l'ouverture (25) du boîtier (11) au moyen d'une douille de guidage (27).
